# EUROPÄISCHE PATENTSCHRIFT

(11) **EP 3 753 758 B1**
(45) Veröffentlichungstag und Bekanntmachung des Hinweises auf die Patenterteilung: **08.09.2021**
(21) Anmeldenummer: 20168171.5
(22) Anmeldetag: 06.04.2020
(51) Int. Cl.: B60D 1/30, B60D 1/06, B60D 1/62, G01L 5/00, B60D 1/24, G01L 1/04

(54) **KUPPLUNGSVORRICHTUNG FÜR FAHRZEUGANHÄNGER MIT EINER ANHÄNGERSEITIGEN ZUGKUGELKUPPLUNG**
COUPLING DEVICE FOR VEHICLE TRAILER WITH A TRAILER-SIDE BALL HITCH
DISPOSITIF D'ACCOUPLEMENT POUR REMORQUES DE VÉHICULE DOTÉ D'UN ATTELAGE À BOULE CÔTÉ REMORQUE

(30) Priorität: 19.06.2019 DE 202019103438 U
(43) Veröffentlichungstag der Anmeldung: 23.12.2020
(73) Patentinhaber: Knott GmbH, D-83125 Eggstätt (DE)
(72) Erfinder: STRASSER, Josef, 83257 Gstadt am Chiemsee (DE)
(74) Vertreter: Flach Bauer Stahl Patentanwälte Partnerschaft mbB

(56) Entgegenhaltungen:
- DE-A1-102014 224 428
- DE-B3-102017 107 064
- DE-U1- 20 316 698
- DE-U1-202007 008 391
- DE-U1-202015 104 525
- DE-U1-202017 102 412
- NL-C1- 1 030 159

## Beschreibung

Die Erfindung betrifft eine Kupplungsvorrichtung für Fahrzeuganhänger mit einer anhängerseitigen Zugkugelkupplung gemäß dem Oberbegriff des Anspruchs 1.

Derartige Kupplungsvorrichtungen werden verwendet, um Fahrzeuganhänger, beispielsweise Wohnwägen oder Bootsanhänger, an Zugfahrzeugen, beispielsweise Autos, anzuhängen. Die anhängeseitige Zugkugelkupplung weist in bekannter Weise ein am vorderen Ende der Deichsel angeordnetes Kupplungsgehäuse auf, das auf einen am Zugfahrzeug befestigten Kugelkopf aufgesetzt werden kann. Ein am Kupplungsgehäuse beweglich gelagertes Zuspannelement dient dazu, nach dem Aufsetzen der Kugelkupplung auf den Kugelkopf diesen zu untergreifen, womit ein Abheben der Zugkugelkupplung vom Kugelkopf verhindert werden soll.

Für die einwandfreie Funktion der Kupplungsvorrichtung ist wesentlich, dass die Zugkugelkupplung korrekt auf den Kugelkopf aufgesetzt, geschlossen und gegebenenfalls auch verriegelt wird. Bei bekannten Zugkugelkupplungen kann jedoch nicht immer sofort erkannt werden, ob die Zugkugelkupplung ordnungsgemäß geschlossen ist.

Weiterhin sind Stabilisierungskupplungen bekannt, bei denen Reibelemente, die in der Zugkugelkupplung angeordnet sind, gegen den Kugelkopf gepresst werden, um durch eine Erhöhung des Schwenkwiderstands im Bereich der Kupplungsvorrichtung Schlingentendenzen des Fahrzeuganhängers zu reduzieren. Zur einwandfreien Funktion derartiger Stabilisierungskugelkupplungen ist es erforderlich, dass die Reibelemente mit einer bestimmten Zuspannkraft gegen den Kugelkopf gedrückt werden. Diese Zuspannkraft kann jedoch durch Verschleiß an Kugelkopf und Reibelementen stark variieren, ohne dass der Fahrer dies bemerkt. Auch vollständige Ausfälle der Stabilisierungsfunktion aufgrund von Verschleiß oder einem Defekt von Elementen der Zugkugelkupplung können bei bekannten Stabilisierungskugelkupplungen unbemerkt bleiben. Weiterhin sind bei motorisch zugespannten Stabilisierungskugelkupplungen die Zuspannkräfte häufig nicht mit der gewünschten Genauigkeit einstellbar.

Aus der NL 1030159 C1 ist eine Kupplungsvorrichtung gemäß dem Oberbegriff des Anspruchs 1 bekannt. Dort sind zwischen einem Kugelkopf und dem Gehäuse der Kupplungsvorrichtung Sensoren angeordnet, mit denen dort auftretende Kräfte und die Richtung dieser Kräfte erfasst werden können. Weiterhin ist dort beschrieben, dass die Räder des Anhängers auf der linken und rechten Seite in Abhängigkeit der gemessenen Kräfte angetrieben oder gebremst werden können.

Aus der DE 10 2014 224 428 A1 ist eine Anhängerkupplung bekannt, bei welcher mittels eines Foliensensors, der in den Kugelkopf eingebettet ist, eine Druck- oder Kraftmessung durchgeführt wird, um Freiräume zu erfassen, in denen die Kugelpfanne nicht gegen den Kugelkopf gepresst wird. Dies dient zur Ermittlung eines Knickwinkels zwischen einem Zugfahrzeug und einem Anhänger.

Aus der DE 20 2017 102 412 U1 ist eine Kugelkopfkupplung mit Reibelementen bekannt, wobei aktuelle Betriebszustände an der Kugelkopfkupplung und am Fahrzeuganhänger über geeignete Sensoren gemessen werden können.

Aus der DE 10 2017 107 064 B3 ist weiterhin ein Fahrzeuganhänger mit einer Energierückgewinnungseinrichtung bekannt, bei dem die Energierückgewinnungseinrichtung in Abhängigkeit der Längskraft, die beim Bremsen des Gespanns auf die Anhängerdeichsel wirkt, aktiviert wird. Bei derartigen Fahrzeuganhängern ist es wünschenswert, die Deichsellängskraft möglichst exakt zu messen.

Der Erfindung liegt daher die Aufgabe zugrunde, eine Kupplungsvorrichtung der eingangs genannten Art zu schaffen, die es ermöglicht, auf einfache und zuverlässige Weise Informationen über die Zuspannung der Zugkugelkupplung am Kugelkopf zu erhalten und/oder auf die Deichsel wirkende Längskräfte zu messen.

Diese Aufgabe wird erfindungsgemäß durch eine Kupplungsvorrichtung mit den Merkmalen der Anspruchs 1 gelöst. Vorteilhafte Ausführungsformen der Erfindung sind in den weiteren Ansprüchen beschrieben.

Erfindungsgemäß ist das erste Kraftmeßelement zwischen dem vorderen Wandabschnitt des Kupplungsgehäuses und einem daran befestigten ersten Reibelement angeordnet und zur Messung von Längskräften ausgebildet, welche das erste Reibelement in Längsrichtung der Zugkugelkupplung auf den vorderen Wandabschnitt ausübt. Das zweite Kraftmeßelement ist zwischen dem Zuspannelement und einem daran befestigten zweiten Reibelement angeordnet und zur Messung von Längskräften ausgebildet, welche in Längsrichtung der Zugkugelkupplung zwischen dem Kugelkopf und dem zweiten Reibelement wirken. Die Auswerteelektronik ist ausgebildet, aus der Differenz der vom ersten und zweiten Kraftmeßelement gemessenen Längskräfte die auf eine Deichsel des Fahrzeuganhängers einwirkenden Längskräfte zu berechnen.

Unter "Längskräfte" werden hierbei diejenigen Kräfte verstanden, die in Richtung der Längsachse des Fahrzeuganhängers auf die Zugkugelkupplung einwirken. Solange keine Zug- oder Bremskräfte auf den Fahrzeuganhänger einwirken, sind bei ordnungsgemäßer Kupplungsvorrichtung die am ersten, vorderen Kraftmesselement und am zweiten, hinteren Kraftmesselement gemessenen Längskräfte gleich hoch. Im Fahrbetrieb, insbesondere beim Beschleunigen oder Bremsen, überlagern sich die Zuspannkräfte mit den auf den Fahrzeuganhänger einwirkenden Längskräften. Die auf den Fahrzeuganhänger bzw. auf die Deichsel einwirkenden Längskräfte können nunmehr aus der (Hälfte der) Differenz der beiden Zuspannkräfte einfach bestimmt werden.

In Abhängigkeit der von der Messeinrichtung abgegebenen Signale können beispielsweise die Radbremsen des Fahrzeuganhängers gezielt betätigt werden. Bei Fahrzeuganhängern mit einer Energierückgewinnungseinrichtung können die Signale der Messeinrichtung verwendet werden, um die Radbremsen erst dann zu betätigen, wenn die Deichselschubkraft einen bestimmten Grenzwert überschreitet, während unterhalb dieses Grenzwertes der Fahrzeuganhänger allein über die Bremswirkung der Generatoren der Energierückgewinnungseinrichtung gebremst wird.

Mittels der erfindungsgemäßen Kupplungsvorrichtung ist es möglich, die Zuspannkraft der Zugkugelkupplung direkt zwischen dem Kugelkopf und dem vorderen Wandabschnitt des Kupplungsgehäuses und zwischen dem Kugelkopf und dem Zuspannelement zu messen, d.h. es wird die Druckkraft gemessen, welche die Zugkugelkupplung auf den Kugelkopf ausübt. Hierdurch ist es auch auf einfache Weise möglich, Verschleiß am Kugelkopf und an der Zugkugelkupplung zu erfassen, da zunehmender Verschleiß in der Regel mit einer Abnahme der Zuspannkräfte korreliert. Über die Messung der Zuspannkraft kann auch auf einfache Weise ein Defekt von Teilen der Zugkugelkupplung erkannt werden. Weiterhin kann über die Messung der Zuspannkraft auf einfache Weise erkannt werden, ob die Zugkugelkupplung korrekt auf dem Kugelkopf sitzt und ordnungsgemäß geschlossen und gegebenenfalls verriegelt wurde. Weiterhin kann die Messung der Zuspannkraft auch zur Steigerung der Präzision verwendet werden, mit der bei motorisch zugespannten Stabilisierungskugelkupplungen die Reibelemente gegen den Kugelkopf gedrückt werden.

Gemäß einer vorteilhaften Ausführungsform ist die Auswerteelektronik ausgebildet, mit einer Anzeigeeinrichtung zum Anzeigen von Kupplungszustandsinformationen zusammenzuwirken. Als Kupplungszustandsinformationen sind im Rahmen der vorliegenden Erfindung insbesondere solche Informationen zu verstehen, die den korrekten Sitz der Zugkugelkupplung auf dem Kugelkopf, den Schließ- bzw. Verriegelungszustand der Zugkugelkupplung und die Höhe der Zuspannkräfte in Bezug auf vorbestimmte Sollwerte betreffen. Bei der Anzeigeeinrichtung kann es sich um eine optische und/oder akustische Anzeigeeinrichtung handeln. Insbesondere ist die Anzeigeeinrichtung derart gestaltet, dass der Fahrer gewarnt wird, wenn der Fahrzeuganhänger nicht ordnungsgemäß am Zugfahrzeug angekuppelt ist oder die Zuspannkräfte nicht vorbestimmten Sollwerten entsprechen.

Gemäß einer vorteilhaften Ausführungsform bestehen die Kraftmesselemente aus einer oder mehreren Kraftmessdosen oder Wägezellen.

Die Anzeigeeinrichtung zum Anzeigen der Kupplungszustandsinformationen kann am Fahrzeuganhänger angeordnet sein und/oder aus einer getrennt vom Fahrzeuganhänger positionierbaren, insbesondere über Funk ansteuerbaren Anzeigeeinrichtung bestehen. Beispielsweise ist es möglich, dass der Zustand der Kupplungsvorrichtung mittels LEDs angezeigt wird. Die Anzeigeeinrichtung kann im Zugfahrzeug im Blickfeld des Fahrers angeordnet sein. Weiterhin ist es möglich, dass die Anzeigeeinrichtung ein Smartphone oder Tablet ist und die Kupplungszustandsinformationen über Funk mittels einer App übermittelt werden.

Die Erfindung wird nachfolgend anhand der Zeichnungen beispielhaft näher erläutert. Es zeigen:
- Figur 1:: einen Längsschnitt einer erfindungsgemäßen Zugkugelkupplung mit schematisch dargestellter Auswerteelektronik und Anzeigeeinrichtung; und
- Figur 2:: eine Seitenansicht der Zugkugelkupplung von Figur 1.

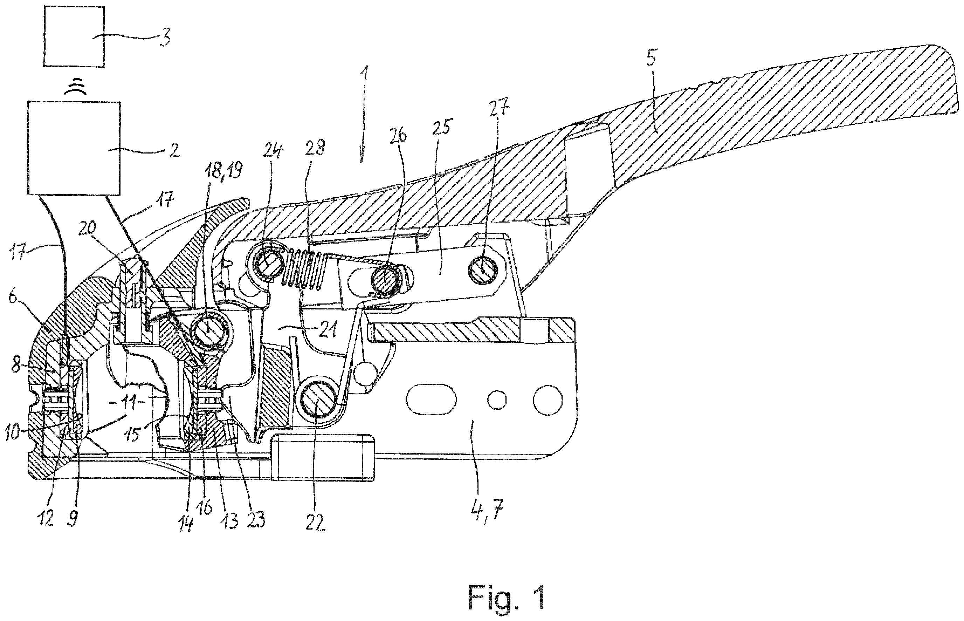

Figur 1 zeigt eine erfindungsgemäße Kupplungsvorrichtung mit einer Zugkugelkupplung 1 für Fahrzeuganhänger wie beispielsweise Wohnwagen, wobei die Zugkugelkupplung 1 in einem mittigen Längsschnitt dargestellt ist. Weiterhin umfasst die Kupplungsvorrichtung eine nachfolgend näher beschriebene Kraftmesseinrichtung, deren Messsignale mittels einer Auswerteelektronik 2 verstärkt und ausgewertet werden. Die von der Auswertelektronik 2 erzeugten Signale können drahtlos oder leitungsgebunden an eine Anzeigeeinrichtung 3 weitergeleitet werden, um dem Fahrer eines Zugfahrzeugs oder einer die Zugkugelkupplung 1 bedienenden Person Kupplungszustandsinformationen anzuzeigen.

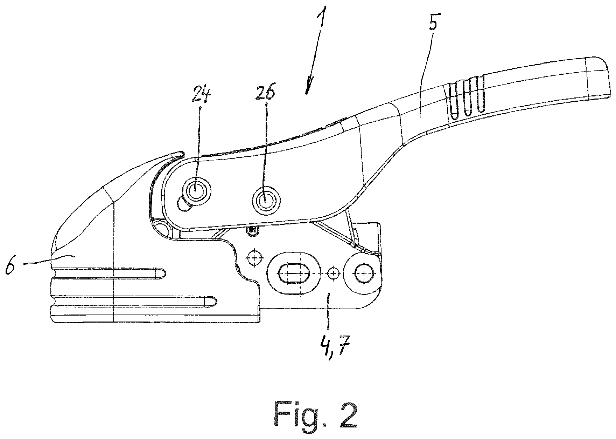

In Figur 2 ist die Zugkugelkupplung 1 in einer Seitenansicht dargestellt.

Die Zugkugelkupplung 1 umfasst ein Kupplungsgehäuse 4 und einen schwenkbaren Handhebel 5. Der vordere Endbereich des Zugkugelkupplung 1 ist mittels eines Rammschutzes 6 aus einem relativ weichen, elastischen Material abgedeckt.

Ein hinterer Abschnitt 7 des Kupplungsgehäuses 4 dient zum Befestigen einer nicht dargestellten Zugstange einer Anhängerdeichsel. Diese Zugstange kann insbesondere Teil einer Auflaufbremseinrichtung sein.

Das Kupplungsgehäuse 4 weist ferner einen vorderen Wandabschnitt 8 auf, der im Wesentlichen halbschalenförmig ausgebildet ist und zur vorderen und seitlichen Abstützung eines nicht näher dargestellten Kugelkopfes dient, der an einer an einem Zugfahrzeug befestigten Anhängerkupplung angeordnet ist.

Am vorderen Wandabschnitt 8 des Kupplungsgehäuses 4 ist ein vorderes, erstes Reibelement 9 befestigt, das zur Anlage am Kugelkopf ausgebildet ist. Das Reibelement 9 ist mittig zu einer vertikalen Mittelebene der Zugkugelkupplung 1 angeordnet. Eine Reibfläche 10, die einem Kugelkopfaufnahmeraum 11 zugewandt ist, ist entsprechend der Form des Kugelkopfes ausgebildet, so dass ein vorderer Abschnitt des Kugelkopfes bei aufgesetzter Zugkugelkupplung 1 flächig an der Reibfläche 10 anliegt.

Zwischen dem ersten Reibelement 9 und dem vorderen Wandabschnitt 8 des Kupplungsgehäuses 4 ist ein erstes Kraftmesselement 12 zur Messung der Druckkräfte angeordnet, welche das erste Reibelement 9 auf den vorderen Wandabschnitt 8 ausübt. Dieses Kraftmesselement 12 ist insbesondere derart ausgebildet, dass es die Druckkräfte messen kann, welche durch Anpressen des Kugelkopfs an das vordere Reibelement 9 in Längsrichtung der Zugkugelkupplung 1 auf den vorderen Wandabschnitt 8 ausgeübt werden.

Nach hinten wird der Kugelkopfaufnahmeraum 11 durch ein beweglich im Kupplungsgehäuse 4 gelagertes Zuspannelement 13 begrenzt, das einen schalenförmigen Abschnitt aufweist, an dem ein zweites Reibelement 14 befestigt ist. Eine dem Kugelkopfaufnahmeraum 11 zugewandte Reibfläche 15 ist entsprechend der Form des Kugelkopfes kalottenförmig ausgebildet, so dass die Reibfläche 15 flächig am Kugelkopf anliegt, wenn die Zugkugelkupplung 1 auf den Kugelkopf aufgesetzt und geschlossen ist. Das zweite Reibelement 14 ist mittig zur vertikalen Mittelebene der Zugkugelkupplung 1 derart angeordnet, dass es im geschlossenen Zustand der Zugkugelkupplung 1 dem ersten Reibelement 9 diametral gegenüberliegt.

Zwischen dem zweiten Reibelement 14 und dem Zuspannelement 13 ist ein zweites Kraftmesselement 16 angeordnet, das zur Messung der Druckkräfte zwischen dem Kugelkopf und dem zweiten Reibelement 14, insbesondere in Längsrichtung der Zugkugelkupplung 1 dient.

Mit Hilfe der Kraftmesselemente 12, 16 können somit einerseits die Druckkräfte zwischen dem vorderen Wandabschnitt 8 des Kupplungsgehäuses 4 und dem Kugelkopf und andererseits zwischen dem Zuspannelement 13 und dem Kugelkopf gemessen werden. Die Kraftmesselemente 12, 16 messen damit die Zuspannkraft der Zugkugelkupplung 1 im Bereich des Kugelkopfes.

Die Kraftmesselement 12, 16 können insbesondere aus Kraftmessdosen oder Wägezellen bestehen.

Die von den Kraftmesselementen 12, 16 erzeugten Signale werden über Leitungen 17 der Auswerteelektronik 2 zugeführt. Die Auswerteelektronik 2 umfasst insbesondere einen Messverstärker und eine Auswertelogik zur Weiterverarbeitung der Messsignale. Die Auswerteelektronik 2 kann insbesondere derart ausgebildet sein, dass detektiert wird, ob die Zugkugelkupplung 1 ordnungsgemäß auf dem Kugelkopf sitzt und die Reibelemente 9, 14 mit der richtigen Druckkraft an den Kugelkopf angedrückt werden. Ein Verschleiß an den Reibelementen 9, 14 und am Kugelkopf sowie ein Defekt in der Zugkugelkupplung 1 kann auf diese Weise einfach erkannt und über die Anzeigeeinrichtung 3 dem Fahrer oder einer Person, welche die Zugkugelkupplung 1 bedient, angezeigt werden. Weiterhin ist es möglich, dass die Auswerteelektronik 2 die aus den Messwerten gewonnenen Kupplungszustandsinformationen laufend einer Bremssystem-Steuereinrichtung und/oder einer Energierückgewinnungseinrichtung des Fahrzeuganhängers zur Verfügung stellt, um die Radbremsen und/oder die Energierückgewinnungseinrichtung zu aktivieren oder zu deaktivieren. Insbesondere lässt sich mit Hilfe der Kraftmesselemente 12, 16 und der Auswerteelektronik 2 im Fahrbetrieb, speziell beim Beschleunigen oder Bremsen, die auf die Deichsel des Fahrzeuganhängers wirkenden Längskräfte präzise bestimmen, so dass bei Fahrzeuganhängern mit Energierückgewinnungseinrichtungen eine besonders genaue Steuerung der Energierückgewinnungseinrichtung beim Abbremsen des Gespanns möglich ist.

Bei der optional vorhandenen Anzeigeeinrichtung 3 kann es sich um eine optische oder akustische Anzeigeeinrichtung handeln. Beispielsweise ist es möglich, dass die Anzeigeeinrichtung 3 verschiedenfarbige LEDs umfasst, die an oder in der Nähe der Zugkugelkupplung 1 angeordnet sind. In Abhängigkeit von den aufleuchtenden LEDs kann eine Bedienungsperson erkennen, ob die Zugkugelkupplung 1 korrekt geschlossen ist oder wie der Verschleißzustand der Kupplungsvorrichtung ist.

Die Anzeigeeinrichtung 3 kann ferner auch aus einer im Bereich des Zugfahrzeugs angeordneten oder aus einer getrennt vom Fahrzeuganhänger oder Zugfahrzeug positionierbaren Anzeigeeinrichtung, beispielsweise Smartphone oder Tablet, bestehen, das über ein geeignetes Anwendungsprogramm die Kupplungszustandsinformationen anzeigt.

Im Folgenden werden die weiteren Teile der in Figur 1 gezeigten Zugkugelkupplung 1 kurz beschrieben, um deren Funktion zu verdeutlichen.

Figur 1 zeigt die Zugkugelkupplung 1 in der geschlossenen Stellung, jedoch ohne Kugelkopf.

Das Zuspannelement 13 ist um eine Schwenkachse 18 schwenkbar im Kupplungsgehäuse 4 gelagert. Die Schwenkachse wird durch einen im Kupplungsgehäuse 13 gehalterten und quer zur Längsachse der Zugkugelkupplung 1 verlaufenden Lagerzapfen 19 gebildet.

Die korrekte Position der Zugkugelkupplung 1 auf dem Kugelkopf wird durch einen Anzeigestift 20 signalisiert. Dieser Anzeigestift 20 ragt durch eine obere Öffnung im Kupplungsgehäuse 4 um ein bestimmtes Maß nach oben über das Kupplungsgehäuse 4 vor, wenn die Zugkugelkupplung 1 ordnungsgemäß auf dem Kugelkopf aufsitzt.

Das schalenförmig, insbesondere kalottenförmig ausgebildete Zuspannelement 13 wird in der in Figur 1 gezeigten geschlossenen Stellung durch einen Steuerhebel 21 gehalten, der um eine Schwenkachse 22 schwenkbar im Kupplungsgehäuse 4 gelagert ist. Der Steuerhebel 21 weist einen vorderen Eingriffsabschnitt 23 auf, der in der in Figur 1 gezeigten Sperrstellung an hinteren Anlageflächen des Zuspannelements 13 derart anliegt, dass sich das Zuspannelement 13 nicht im Gegenuhrzeigersinn um die Schwenkachse 18 drehen kann, so dass das Zuspannelement 13 in der geschlossenen Stellung verriegelt ist.

Das Öffnen der Zugkugelkupplung 1 erfolgt dadurch, dass der Steuerhebel 21 etwas im Uhrzeigersinn geschwenkt wird. Dies erfolgt mittels des Handhebels 5, der über einen Gelenkbolzen 24 mit dem Steuerhebel 21 gekoppelt ist.

Eine elastische Vorspanneinrichtung 25, die innerhalb eines Federgehäuses angeordnete Druckfedern aufweist, drängt in der Verschlussposition des Handhebels 5 das Zuspannelement 13 in seine Verschlussposition. Die Druckfedern sind an ihrem vorderen Ende an einem Querbolzen 26 des Handhebels 5 abgestützt. An ihrem hinteren Ende sind die Druckfedern an einem Querbolzen 27 des Kupplungsgehäuses 4 abgestützt. Über eine Zugfeder 28, die mit ihrem vorderen Ende am Gelenkbolzen 24 des Steuerhebels 21 und mit ihrem hinteren Ende am Querbolzen 26 des Handhebels 26 eingehängt ist, wird der Steuerhebel 21 im Uhrzeigersinn, d.h. in Entriegelungs- bzw. Öffnungsrichtung, vorgespannt und gleichzeitig der Handhebel 5 über den Querbolzen 26 nach vorne gedrängt.

Zum Öffnen der Zugkugelkupplung 1 wird, wie aus der DE 20 2017 102 134 U1 bekannt, das hintere Ende des Handhebels 5 zunächst bis zu einer selbstsichernden Zwischenstellung nach oben geschwenkt. Wird der Handhebel 5 anschließend etwas nach hinten gezogen, kann diese selbstsichernde Zwischenstellung überwunden und der Handhebel 5 vollständig geöffnet werden, wodurch der Steuerhebel 21 das Zuspannelement 13 freigibt und dieses im Gegenuhrzeigersinn um seine Schwenkachse 18 in die Öffnungsstellung schwenken kann.

Im Rahmen der Erfindung ist eine Vielzahl von Variationen möglich. Der Öffnungs- und Schließmechanismus der Zugkugelkupplung 1 muss nicht wie dargestellt ausgebildet sein, sondern kann in unterschiedlichster Art und Weise gestaltet sein.

## Patentansprüche

1. Kupplungsvorrichtung für Fahrzeuganhänger mit einer anhängerseitigen Zugkugelkupplung (1), die ein Kupplungsgehäuse (4), das einen vorderen Wandabschnitt (8) aufweist, der sich über einen Teil eines Kugelkopfaufnahmeraums (11) herum erstreckt, und ein Zuspannelement (13) umfasst, das auf einer zum vorderen Wandabschnitt (8) gegenüberliegenden Seite des Kugelkopfaufnahmeraums (11) angeordnet, beweglich am Kupplungsgehäuse (4) gelagert und in Halteeingriff mit einem Kugelkopf eines Zugfahrzeugs bringbar ist, wobei die Kupplungsvorrichtung eine die Zuspannkraft zwischen dem Kugelkopf und der Zugkugelkupplung (1) messende Kraftmesseinrichtung umfasst, die ein am vorderen Wandabschnitt (8) des Kupplungsgehäuses (4) angeordnetes erstes Kraftmesselement (12) und ein am Zuspannelement (13) angeordnetes zweites Kraftmesselement (16) sowie eine Auswerteelektronik (2) umfasst, die ausgebildet ist, mit einer Bremssystem-Steuereinrichtung und/oder einer Energierückgewinnungseinrichtung des Fahrzeuganhängers zusammenzuwirken, **dadurch gekennzeichnet, dass** das erste Kraftmesselement (12) zwischen dem vorderen Wandabschnitt (8) des Kupplungsgehäuses (4) und einem daran befestigten ersten Reibelement (9) angeordnet und zur Messung von Längskräften ausgebildet ist, welche das erste Reibelement (19) in Längsrichtung der Zugkugelkupplung (1) auf den vorderen Wandabschnitt (8) ausübt,
dass das zweite Kraftmesselement (16) zwischen dem Zuspannelement (13) und einem daran befestigten zweiten Reibelement (14) angeordnet und zur Messung von Längskräften ausgebildet ist, welche in Längsrichtung der Zugkugelkupplung (1) zwischen dem Kugelkopf und dem zweiten Reibelement (14) wirken,
und dass die Auswerteelektronik (2) ausgebildet ist, aus der Differenz der vom ersten und zweiten Kraftmesselement (12, 16) gemessenen Längskräfte die auf eine Deichsel des Fahrzeuganhängers einwirkenden Längskräfte zu berechnen.

2. Kupplungsvorrichtung nach Anspruch 1, **dadurch gekennzeichnet, dass** die Auswerteelektronik (2) ausgebildet ist, mit einer Anzeigeeinrichtung (3) zum Anzeigen von Kupplungszustandsinformationen zusammenzuwirken.

3. Kupplungsvorrichtung nach Anspruch 1 oder 2, **dadurch gekennzeichnet, dass** die Kraftmesselemente (12, 16) aus einer oder mehreren Kraftmessdosen oder Wägezellen bestehen.

4. Kupplungsvorrichtung nach Anspruch 2 oder 3, **dadurch gekennzeichnet, dass** die Anzeigeeinrichtung (3) zum Anzeigen der Kupplungszustandsinformationen am Fahrzeuganhänger angeordnet ist.

5. Kupplungsvorrichtung nach einem der Ansprüche 2 bis 4, **dadurch gekennzeichnet, dass** die Anzeigeeinrichtung (3) zum Anzeigen der Kupplungszustandsinformationen aus einer getrennt vom Fahrzeuganhänger positionierbaren, über Funk ansteuerbaren Anzeigeeinrichtung besteht.

6. Kupplungsvorrichtung nach Anspruch 5, **dadurch gekennzeichnet, dass** die Anzeigeeinrichtung (3) ein Smartphone, Tablet und/oder eine im Zugfahrzeug angeordnete Anzeigeeinheit ist.

## Claims

1. Coupling device for vehicle trailers having a trailer-side tractive ball coupling (1), which comprises a coupling housing (4), which has a front wall section (8) extending around across a part of a ball head receiving chamber (11), and a chucking element (13) which is arranged on a side of the ball head receiving chamber (11) opposite the front wall section (8), is moveably mounted on the coupling housing (4) and can be brought into holding engagement with a ball head of a towing vehicle, wherein the coupling device comprises a force measuring device measuring the chucking force between the ball head and the tractive ball coupling (1), said force measuring device comprising a first force measuring element (12) arranged on the front wall section (8) of the coupling housing (4) and a second force measuring element (16) arranged on the chucking element (13), as well as an evaluation electronics system (2) which is formed to interact with a braking system control device and/or an energy recovery device of the vehicle trailer, **characterised in that** the first force measuring element (12) is arranged between the front wall section (8) of the coupling housing (4) and a first friction element (9) fixed thereon and is formed to measure longitudinal forces which the first friction element (19) exerts in the longitudinal direction of the tractive ball coupling (1) on the front wall section (8),
the second force measuring element (16) is arranged between the chucking element (13) and a second friction element (14) fixed thereon and is formed to measure longitudinal forces that act in the longitudinal direction of the tractive ball coupling (1) between the ball head and the second friction element (14),
and the evaluation electronics system (2) is formed to calculate the longitudinal forces acting on a drawbar of the vehicle trailer from the difference of the longitudinal forces measured by the first and second force measuring element (12, 16).

2. Coupling device according to claim 1, **characterised in that** the evaluation electronics system (2) is formed to interact with a display device (3) for displaying coupling state information.

3. Coupling device according to claim 1 or 2, **characterised in that** the force measuring elements (12, 16) consist of one or more force measuring capsules or load cells.

4. Coupling device according to claim 2 or 3, **characterised in that** the display device (3) for displaying the coupling state information is arranged on the vehicle trailer.

5. Coupling device according to one of claims 2 to 4, **characterised in that** the display device (3) for displaying the coupling state information consists of a display device that can be positioned separately to the vehicle trailer and can be controlled via radio.

6. Coupling device according to claim 5, **characterised in that** the display device (3) is a smartphone, tablet and/or a display unit arranged in the towing vehicle.

## Revendications

1. Dispositif d'attelage pour remorque de véhicule, doté d'un coupleur pour boule de traction (1) côté remorque comprenant un bâti d'attelage (4) présentant une section de paroi avant (8) entourant une partie d'une cavité de réception de boule (11), ainsi qu'un élément de serrage (13) qui est disposé sur un côté de la cavité de réception de boule (11) opposé à la section de paroi avant (8), qui est agencé mobile sur le bâti d'attelage (4) et qui peut être mis en prise de retenue avec la boule d'attelage d'un véhicule de traction, ledit dispositif d'attelage comprenant un dispositif de mesure de force qui mesure la force de serrage entre la boule d'attelage et le coupleur pour boule de traction (1) et qui comprend un premier élément de mesure de force (12) disposé sur la section de paroi avant (8) du bâti d'attelage (4), un deuxième élément de mesure de force (16) disposé sur l'élément de serrage (13) ainsi qu'une électronique d'évaluation (2) conçue pour coopérer avec un dispositif de commande du système de freinage et/ou un dispositif de récupération d'énergie de la remorque,
**caractérisé en ce que** le premier élément de mesure de force (12) est disposé entre la section de paroi avant (8) du bâti d'attelage (4) et un premier élément de frottement (9) qui y est fixé, et est conçu pour mesurer des forces longitudinales exercées par le premier élément de frottement (9), dans le sens longitudinal du coupleur pour boule de traction (1), sur la section de paroi avant (8),
**en ce que** le deuxième élément de mesure de force (16) est disposé entre l'élément de serrage (13) et un deuxième élément de frottement (14) qui y est fixé, et est conçu pour mesurer des forces longitudinales agissant dans le sens longitudinal du coupleur pour boule de traction (1) entre la boule d'attelage et le deuxième élément de frottement (14),
et **en ce que** l'électronique d'évaluation (2) est conçue pour calculer, à partir de la différence des forces longitudinales mesurées par les premier et deuxième éléments de mesure de force (12, 16), les forces longitudinales agissant sur un timon de la remorque.

2. Dispositif d'attelage selon la revendication 1, **caractérisé en ce que** l'électronique d'évaluation (2) est conçue pour coopérer avec un dispositif de visualisation (3) destiné à afficher des informations de conditions d'attelage.

3. Dispositif d'attelage selon la revendication 1 ou 2, **caractérisé en ce que** les éléments de mesure de force (12, 16) consistent en une ou plusieurs prises de mesure de force ou un ou plusieurs capteurs de force.

4. Dispositif d'attelage selon la revendication 2 ou 3, **caractérisé en ce que** le dispositif de visualisation (3) destiné à afficher les informations de conditions d'attelage est agencé sur la remorque.

5. Dispositif d'attelage selon l'une des revendications 2 à 4, **caractérisé en ce que** le dispositif de visualisation (3) destiné à afficher les informations de conditions d'attelage consiste en un dispositif de visualisation pouvant être disposé à l'écart de la remorque et commandé sans fil.

6. Dispositif d'attelage selon la revendication 5, **caractérisé en ce que** le dispositif de visualisation (3) est un smartphone, une tablette et/ou un dispositif de visualisation installé dans le véhicule de traction.
